Europäisches Patentamt

European Patent Office

Office européen des brevets

(19)

(11) Veröffentlichungsnummer: **0 311 855**

**A2**

(12) **EUROPÄISCHE PATENTANMELDUNG**

(21) Anmeldenummer: **88116189.7**

(22) Anmeldetag: **30.09.88**

(51) Int. Cl.4: **G11B 5/31** , **G11B 5/187** , **G11B 5/245**

(30) Priorität: **16.10.87 DE 3735148**

(43) Veröffentlichungstag der Anmeldung:
**19.04.89 Patentblatt 89/16**

(84) Benannte Vertragsstaaten:
**AT CH DE FR GB IT LI NL**

(71) Anmelder: **Siemens Aktiengesellschaft Berlin und München**
**Wittelsbacherplatz 2**
**D-8000 München 2(DE)**

(72) Erfinder: **Diepers, Heinrich, Dr. Dipl.Phys.**
**Veit-Stoss-Strasse 44**
**D-8552 Höchstadt(DE)**

(54) **Dünnfilm-Magnetkopf mit schichtweisem Aufbau.**

(57) Der in Dünnfilmtechnik aufgebaute, über eine Datenspur zu führende Magnetkopf enthält einen ringkopfähnlichen magnetischen Leitkörper mit einem ersten und einem zweiten Magnetschenkel, die hintereinander angeordnete Magnetpole ausbilden. Dieser Magnetkopf soll dahingehend ausgestaltet sein, daß ein Mitlesen von Datenresten im Randbereich der Datenspuren verhindert wird. Hierzu ist erfindungsgemäß vorgesehen, daß der Magnetpol (P1) des ersten Magnetschenkels (9) insgesamt eine größere Breite als der Magnetpol (P2) des zweiten Magnetschenkels (10) hat, wobei der Magnetpol (P1) des ersten Magnetschenkels (9) von mindestens zwei gegenseitig isolierten Magnetschichten (9a, 9b) mit unterschiedlicher Breite und unterschiedlichem magnetischen Verhalten (Msa, $\mu$ra; Msb, $\mu$rb) gebildet ist, so daß die Magnetschicht (9a) mit der größeren Breite zumindest in einem an den Magnetpol (P1) angrenzenden Endbereich (11) des ersten Magnetschenkels (9) effektiv einen größeren magnetischen Widerstand (Rma) hat als die Magnetschicht (9b) mit der geringeren Breite.

FIG 2

## Dünnfilm-Magnetkopf mit schichtweisem Aufbau

Die Erfindung bezieht sich auf einen Dünnfilm-Magnetkopf mit schichtweisem Aufbau, welcher Magnetkopf

a) über einer Datenspur eines magnetisierbaren Aufzeichnungsmediums zu führen ist und

b) einen den magnetischen Fluß führenden, ringkopfähnlichen magnetischen Leitkörper mit einem ersten und einem zweiten Magnetschenkel enthält,

wobei diese Magnetschenkel

- jeweils mindestens eine magnetische Schicht mit vorbestimmtem magnetischen Verhalten aufweisen,
- dem Aufzeichnungsmedium zugewandte Magnetpole ausbilden, die in (relativer) Bewegungsrichtung des Magnetkopfes bezüglich des Aufzeichnungsmediums gesehen hintereinander angeordnet und durch einen Spalt vorbestimmter Weite getrennt sind und vorbestimmte Breiten quer zur Bewegungsrichtung haben,
sowie
- außerhalb des Polbereichs einen Zwischenraum begrenzen, durch welchen sich die Windungen einer Schreib- und/oder Lesespulenwicklung erstrecken.

Ein entsprechendes Magnetkopf ist z.B. aus der EP-A-0 232 505 zu entnehmen.

Die Prinzipien einer longitudinalen (horizontalen) wie auch einer senkrechten (vertikalen) Magnetisierung zur Speicherung von Daten in entsprechenden, insbesondere plattenförmigen Auf zeichnungsmedien sind allgemein bekannt (vgl. z.B. "IEEE Transactions on Magnetics", Vol. MAG-16, No. 1, Januar 1980, Seiten 71 bis 76 oder Vol. MAG-20, No. 5, September 1984, Seiten 657 bis 662 und 675 bis 680). Für diese Magnetisierungsarten zu verwendende Magnetköpfe weisen im allgemeinen zur Führung des magnetischen Flusses jeweils einen Leitkörper aus magnetischem Material auf, der mit zwei Magnetschenkeln eine Gestalt ähnlich einer Ringform hat. Diese Magnetschenkel bilden an ihren dem Aufzeichnungsmedium zugewandten Enden Magnetpole aus, die in relativer Bewegungsrichtung des Kopfes gesehen hintereinander angeordnet sind, wobei ein Spalt vorbestimmter Weite ausgebildet ist. Außerdem begrenzen die Magnetschenkel einen Zwischenraum, der in einem Teilbereich aufgrund einer Vergrößerung ihres gegenseitigen Abstandes entsprechend erweitert ist. Durch diesen Zwischenraum erstrekken sich die Windungen mindestens einer Schreib- und/oder Lesespulenwicklung.

Einen entsprechenden Aufbau zeigt auch der aus der vorstehend genannten EP-A bekannte Magnetkopf. Dieser Magnetkopf schreibt quasi als Einzelpol-Kopf praktisch nur mit einem einzigen Magnetschenkel gemäß dem Prinzip einer senkrechten Magnetisierung. Hierzu sind seine beiden Magnetschenkel so ausgebildet, daß sie während der Schreibfunktion unterschiedliches magnetisches Verhalten zeigen.

Zur Führung solcher Magnetköpfe über Datenspuren eines Aufzeichnungsmediums hinweg sind Spurführungssysteme mit hoher Spurhaltungsgenauigkeit von z.B. ± 1,5 μm erforderlich. Solche Spurführungssysteme sind z.B. als "Dedicated Servosystem" bekannt.

Die bisherige Herstellungstechnologie für bekannte longitudinal schreibende Magnetköpfe mit schrittweisem Aufbau der Schichten ihrer einzelnen Magnetschenkel und jeweils anschließender Mikrostrukturierung bringt es gegebenenfalls mit sich, daß der zuerst auf einem im allgemeinen nichtmagnetischen Substrat abgeschiedene erste Magnetschenkel im Bereich seines Magnetpoles eine etwas größere Breite quer zur relativen Bewegungsrichtung des Kopfes hat als der Magnetpol des später abgeschiedenen zweiten Magnetschenkels. Geht man von einem solchen Aufbau aus, so ist zu beobachten, daß beim Schreiben im wesentlichen die Breite des (breiteren) Magnetpols des ersten Magnetschenkels wirksam ist, während beim Lesen im wesentlichen die Polbreite des (schmäleren) Magnetpols des zweiten Magnetschenkels bestimmend ist. Hierbei bewirken die magnetischen Randfelder zwischen den beiden Magnetpolen einen flacheren Abfall des Lesefeldprofiles zum Rand hin. Es kann deshalb auch von einem Mitlesen des rechten und linken Randbereiches des breiteren Magnetpoles, d.h. des über den schmäleren Magnetpol des zweiten Magnetschenkels hinausreichenden Randes des breiteren Magnetpoles gesprochen werden. Dies hat in Verbindung mit dem genannten Servosystem mit einer Spurhaltungsgenauigkeit von ± 1,5 μm und mehr zur Folge, daß nach mehrmaligem Überschreiben einer Datenspur die Seitenränder der Datenspuren unscharf werden, quasi ausfransen. Im Extremfall wird sogar der vielfach auch als "Rasen" bezeichnete, z.B. 3 bis 4 μm breite Abstandsbereich zwischen benachbarten Datenspuren zumindest stellenweise vollständig überschrieben. Dies bedeutet, daß im Randbereich der Datenspuren inselförmig Datenreste aus unterschiedlichen Überschreibungsläufen bestehen bleiben können, die beim Lesen dieser Spur wegen der nicht genügend unterdrückbaren Lesefähigkeit der Randbereiche des breiteren Magnetpoles des ersten Magnetschenkels zu Lesefehlern führen können.

Aufgabe der vorliegenden Erfindung ist es deshalb, den Dünnfilm-Magnetkopf der eingangs genannten Art dahingehend auszugestalten, daß die Entstehung solcher inselförmiger Datenreste vermieden oder ihr Mitlesen verhindert wird.

Diese Aufgabe wird erfindungsgemäß dadurch gelöst, daß der Magnetpol des ersten Magnetschenkels insgesamt eine größere Breite als der Magnetpol des zweiten Magnetschenkels hat, wobei der Magnetpol des ersten Magnetschenkels von mindestens zwei gegenseitig isolierten Magnetschichten mit unterschiedlicher Breite und unterschiedlichem magnetischen Verhalten gebildet ist, so daß die Magnetschicht mit der größeren Breite zumindest in einem an den Magnetpol angrenzenden Endbereich des ersten Magnetschenkels effektiv einen größeren magnetischen Widerstand hat als die Magnetschicht mit der geringeren Breite.

Aufgrund dieser Ausgestaltung des Dünnfilm-Magnetkopfes schreibt dieser mit effektiv größerer Breite, während er mit vergleichsweise geringerer Breite liest. Die damit verbundenen Vorteile sind insbesondere darin zu sehen, daß Unschärfen (Ausfransungen) der Schreibspurränder aufgrund unvermeidlicher Toleranzen eines stets erforderlichen Servo-Systems zur Spurführung des Magnetkopfes keine wesentliche Bedeutung mehr haben, da diese Ränder beim Lesen nicht mehr miterfaßt werden. Man kann deshalb gegebenenfalls sogar auf besondere Abstandsbereiche zwischen benachbarten Schreibspuren verzichten; d.h., Schreibspur kann an Schreibspur zu liegen kommen. Die gemeinsamen Ränder der Schreibspuren werden ja bei der Lesefunktion nicht mitgelesen, d.h. es existiert quasi nur ein Lese-Rasen zwischen den schmäleren Lesespuren.

Vorteilhafte Ausgestaltungen des erfindungsgemäßen Dünnfilm-Magnetkopfes gehen aus den Unteransprüchen hervor.

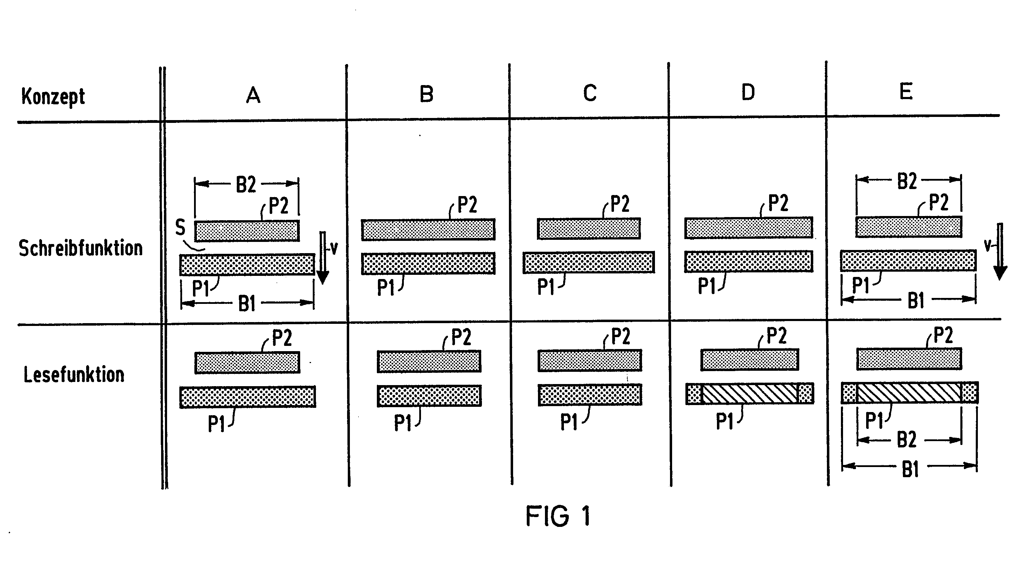

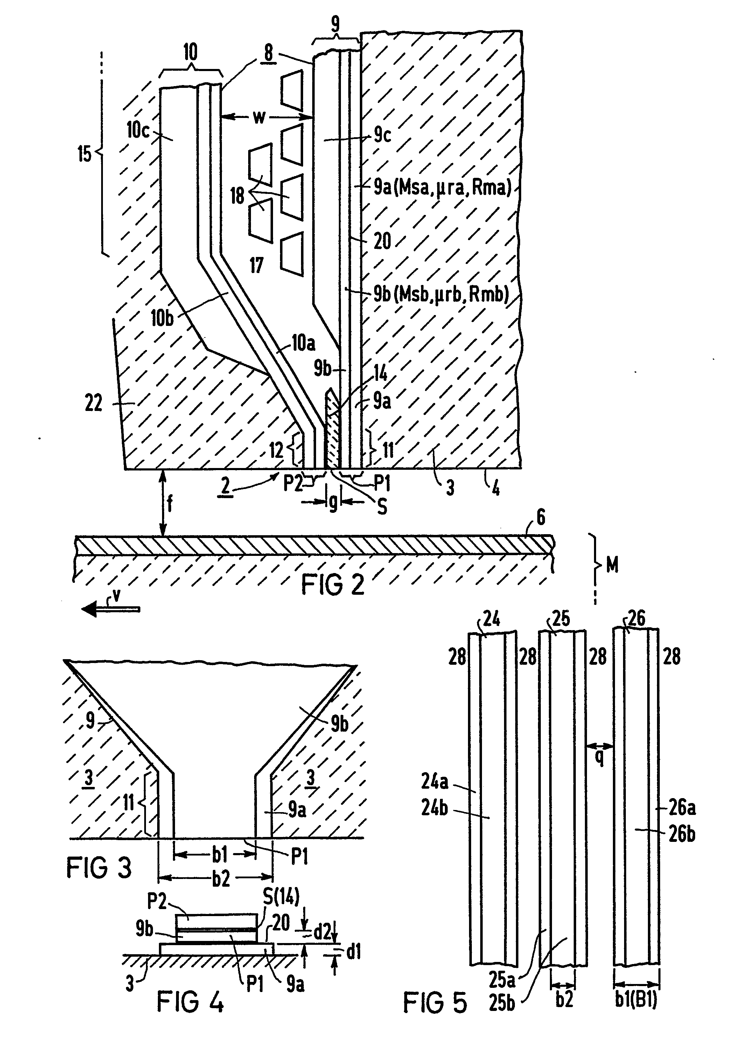

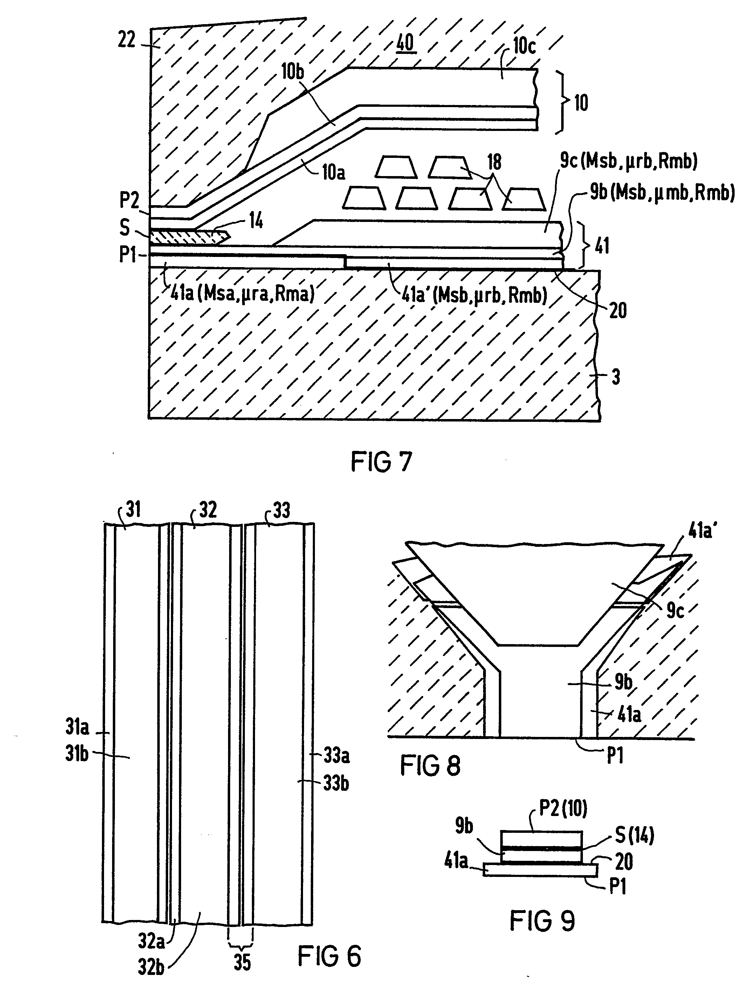

Zur weiteren Erläuterung der Erfindung wird auf die Zeichnung verwiesen. In Figur 1 sind prinzipielle Ausbildungsmöglichkeiten der Polflächen von Magnetköpfen für eine Schreib-/ bzw. Lesefunktion veranschaulicht. Figur 2 zeigt einen erfindungsgemäßen Magnetkopf, dessen Magnetpole in den Figuren 3 und 4 in verschiedener Ansicht wiedergegeben sind. In den Figuren 5 und 6 sind zu einem erfindungsgemäßen Magnetkopf zugehörende Datenspuren angedeutet. In den Figuren 7 bis 9 ist eine weitere Ausbildungsmöglichkeit eines erfindungsgemäßen Magnetkopfes in den Figuren 2 bis 4 entsprechender Darstellung veranschaulicht. In den Figuren übereinstimmende Teile sind mit den gleichen Bezugzeichen versehen.

In Figur 1 sind als Draufsicht die auch als "Polspiegel" bezeichneten Polflächen verschiedener Konzepte von Dünnfilm-Magnetköpfen gegenübergestellt. Jeder dieser Magnetköpfe soll dabei jeweils einen magnetischen Leitkörper mit zwei Magnetschenkeln aufweisen, die in relativer Bewegungsrichtung v eines Aufzeichnungsmediums bezüglich des Magnetkopfes gesehen hintereinander angeordnet sind. Die Magnetschenkel jedes Kopfes bilden an ihren dem Aufzeichnungsmedium zugewandten Endflächen Pole P1 bzw. P2 aus, die durch einen engen Spalt S beabstandet sind und vorbestimmte, quer zur Bewegungsrichtung v zu messende Breiten haben. Dabei sei der mit P1 bezeichnete Pol einem Magnetschenkel zugeordnet, welcher als erster auf einem im allgemeinen nicht-magnetischen Substrat aufgebracht ist. Unter Berücksichtigung der relativen Bewegungsrichtung ist dieser erste Magnetschenkel der vorlaufende Schenkel des Magnetkopfes. Der den Pol P2 ausbildende zweite Magnetschenkel ist somit als nachlaufender Schenkel anzusehen. In der Figur sind für jedes der mit A bis E bezeichneten Konzepte die effektiven Polflächen bei einer Schreibfunktion (oben) und einer Lesefunktion (darunter) nach Art eines Tabellenschemas gegenübergestellt:

Bei dem Konzept A wird von einem bekannten Dünnfilm-Magnetkopf ausgegangen. Der einem nicht dargestellten Substrat zugewandte erste Magnetpol P1 hat dabei eine quer zur relativen Bewegungsrichtung v zu messende größere Breite B1 im Vergleich zum zweiten Magnetpol P2 mit einer Breite B2. Sowohl für die Schreibfunktion als auch für die Lesefunktion sind die effektiven Flächen der beiden Magnetpole jeweils unverändert.

Die Konzepte B, C und D gehen von geometrisch unterschiedlich breiten Polschenkeln im Falle des Lesens und Schreibens aus; d.h., es sind zwei getrennte Dünnfilm-Magnetköpfe für die jeweilige Funktion vorgesehen, zwischen denen hin- und herzuschalten ist. Derartige Lösungen sind jedoch technologisch verhältnismäßig aufwendig und lassen sich im allgemeinen nur durch Unterbringung von je einem Kopf auf je einer der beiden Flugkufen eines als Flugkörper gestalteten Substrates realisieren. Hierbei entstehen Probleme in der Produktionsausbeute durch erhöhtes Ausfallrisiko. Außerdem kann kein Drehpositionierer eines Antriebssystems, sondern nur ein Linearpositionierer verwendet werden, da beim Schreiben und Lesen desselben Datenbits dann unterschiedliche Verkantungswinkel (Skew-Winkel) beim Schreib- und Lesekopf vorliegen. Der Kufenabstand zwischen der den Schreibkopf tragenden und der den Lesekopf tragenden Flugkufe beträgt nämlich einige mm.

Das Konzept E ist der Erfindung zugrundegelegt. Hierbei ist nur ein einziger Schreib-/Lesemagnetkopf mit unterschiedlicher Breite B1 bzw. B2 seiner Magnetpole P1 und P2 erforderlich, wobei eine Reduzierung der effektiven Polbreite von P1 beim Übergang vom Schreiben zum Lesen auf etwa die Breite B2 durch Maßnahmen bewirkt wird, die sich auf das magnetische Verhalten des entsprechenden Magnetschenkels beziehen. Diese Maßnahmen sind anhand von Figur 2 näher erläutert.

Bei dem in Figur 2 nur teilweise als Längsschnitt dargestellten Magnetkopf wird von an sich bekannten, ringkopfähnlichen Ausführungsformen mit schichtweisem Aufbau ausgegangen, wie sie insbesondere für das Prinzip einer senkrechten (vertikalen) Magnetisierung entwickelt worden sind (vgl. z.B. die eingangs genannte EP-A). Mit dem allgemein mit 2 bezeichneten Magnetkopf soll sowohl eine Schreib- als auch eine Lese-Funktion nach diesem Prinzip auszuüben sein. Der Kopf befindet sich auf der rückwärtigen Flachseite eines nicht-magnetischen Substrates 3, das als aerodynamischer Flugkörper mit Flugkufen gestaltet ist (vgl. z.B. EP-A-0 137 051). Der Magnetkopf ist somit aerodynamisch über einem an sich bekannten Aufzeichnungsmedium M in geringer Flughöhe f zu führen, wobei die relative Bewegungsrichtung des Aufzeichnungsmediums bezüglich des Magnetkopfes durch eine mit v bezeichnete gepfeilte Linie angedeutet ist. Die sich zwischen der zu mindestens einer Flugkufe gestalteten, dem Aufzeichnungsmedium M zugewandten Unterseite 4 des Kopfes 2 und dem Aufzeichnungsmedium einstellende Flughöhe f beträgt beispielsweise nur einige Zehntel μm. Das Aufzeichnungsmedium M, z.B. eine Magnetspeicherplatte, weist eine Speicherschicht 6 auf, die z.B. vertikal (senkrecht) orientiert ist und beispielsweise aus einer CoCr-Legierung besteht.

Der Magnetkopf 2 enthält einen den Magnetfluß führenden, ringkopfähnlichen magnetischen Leitkörper 8 mit einem ersten Magnetschenkel 9 und einem zweiten Magnetschenkel 10. Diese Schenkel sind weitgehend und insbesondere in ihren dem Aufzeichnungsmedium M zugewandten, Magnetpole P1 bzw. P2 ausbildenden Endbereichen 11 bzw. 12 zumindest annähernd senkrecht zur Oberfläche des Aufzeichnungsmediums ausgerichtet. Unter den Endbereichen wird dabei jeweils das Endstück eines Magnetschenkels verstanden, das zumindest weitgehend einheitliche Querausdehnung bzw. Dicke aufweist. Die Endbereiche 11 und 12 bzw. die Pole P1 und P2 sind durch einen Luftspalt S räumlich getrennt, der vorteilhaft eine geringe longitudinale, d.h. in Bewegungsrichtung v weisende Weite g von unter 1 μm aufweist. Dieser Luftspalt S ist durch eine sehr harte, in der Figur nur angedeutete Spaltschicht 14 z.B. aus $Al_2O_3$ oder $SiO_2$ ausgefüllt. In einem mittleren Bereich 15 des magnetischen Leitkörpers 8 ist der Abstand zwischen den beiden Magnetschenkeln 9 und 10 gegen über dieser Spaltweite g erweitert, indem z.B. der hinsichtlich der Bewegungsrichtung v rückwärtige, d.h. nachlaufende Magnetschenkel 10 auf eine größere Weite w bezüglich des vorderen, eben ausgebildeten und dem Substrat 3 zugewandten Magnetschenkels 9 führt. Außerhalb dieses Bereichs 15 ist auf der dem Aufzeichnungsmedium M abgewandten, in der Figur nicht dargestellten Seite des Leitkörpers 8 der Magnetschenkel 10 in bekannter Weise in einem Verbindungsbereich an den Magnetschenkel 9 angefügt, so daß sich damit die ringkopfähnliche Gestalt des Leitkörpers 8 ergibt. Durch den zwischen den beiden Magnetschenkeln 9 und 10 in den mittleren Bereich 15 ausgebildeten Zwischenraum 17 erstreckt sich mindestens eine flache Spulenwicklung 18, die sowohl als Schreib- als auch als Lesespule dient.

Die beiden Magnetschenkel 9 und 10 des Magnetkopfes 2 sind zumindest in ihren Endbereichen 11 und 12 jeweils durch mindestens zwei magnetische Schichten 9a, 9b bzw. 10a, 10b ausgebildet. Dabei sind zumindest die beiden Schichten 9a und 9b des ersten Magnetschenkels 9 durch eine dünne Isolationsschicht 20 aus z.B. $SiO_2$ getrennt. Ge-mäß der Erfindung sollen nun diese Magnetschichten 9a und 9b zumindest in dem Polbereich 11 unterschiedlich breit ausgebildet sein. Diese Ausbildung geht insbesondere aus der in Figur 3 gezeigten Draufsicht auf den Polbereich 11 des Magnetschenkels 9 sowie aus der in Figur 4 gezeigten Aufsicht auf die entsprechende Polfläche (Polspiegel) des Magnetpoles P1 hervor. Dabei soll die dem Substrat 3 zugewandte Magnetschicht 9a die größere Breite b1 aufweisen, während die durch die Isolationsschicht 20 von ihr getrennte Magnetschicht 9b schmäler ist und die Breite b2 hat. Wie aus Figur 4 zu entnehmen ist, wird diese Breite b2 der Magnetschicht 9b vorteilhaft etwa gleich groß wie die Breite B2 des zweiten Magnetschenkels 10 des Magnetkopfes gewählt. Gemäß der Erfindung soll die breitere Magnetschicht 9a des Magnetschenkels 9 die effektive Breite B1 des Schreibschenkels darstellen, während die schmälere Magnetschicht 9b praktisch nur der Lesesch en-kel des Magnetpoles P1 ist. Die Breiten b1 und b2 werden entsprechend der Spurfolgegenauigkeit des für den Magnetkopf eingesetzten Servosystems so gewählt, daß die Magnetschicht 9b die Randkurve einer aktuell geschriebenen Datenspur nicht berührt.

Um im wesentlichen nur mit dem breiteren Magnetpol P1 der Magnetschicht 9a des Magnetschenkels 9 zu schreiben, hingegen nur mit dem schmäleren Magnetpol P1 der Magnetschicht 9b zu lesen, müssen diese Magnetschichten jeweils ein ganz bestimmtes magnetisches Verhalten zeigen. D.h., die magnetischen Eigenschaften der Magnetschicht 9b sind gegenüber der Magnetschicht 9a so zu wählen, daß die Magnetschicht 9b insbesondere früher in die magnetische Sättigung getrieben wird als die Magnetschicht 9a und daß damit der magnetische Fluß bei weiter ansteigendem Feld über den Magnetschenkel 9a geführt wird, bis auch dieser Magnetschenkel 9a in die Sättigung geht. Das heißt also, daß die Sättigungsmagnetisierung Msb der Magnetschicht 9b kleiner ist als die Sättigungsmagnetisierung Msa der Magnetschicht 9a. Damit ist gewährleistet, daß der Magnetschenkel 9 mit seinem Pol P1 effektiv über die Magnetschichten 9b und 9a in seiner vollen Breite B1 = b1 schreibt. Der durch die Isolationsschicht 20 zwischen den Magnetschichten 9b und 9a aufgebaute magnetische Widerstand kann durch die treibende Erregung des Spulenfeldes leicht überwunden werden. Dies kann jedoch nicht das bei einem Lesevorgang verhältnismäßig schwache Streufeld eines Magnetisierungsüberganges in der Datenspur des Aufzeichnungsmediums bewirken. D.h., beim Lesen führt praktisch nur die Magnetschicht 9b den magnetischen Fluß. Somit liest also der erfindungsgemäße Magnetkopf 2 nur mit der schmalen Breite b2 der Magnetschicht 9b seines Magnetschenkels 9 sowie natürlich mit dem am Pol P2 etwa gleich breiten Magnetschenkel 10.

Prinzipiell heißt dies:
Die Magnetschicht 9b hat einen geringeren magnetischen Widerstand als die Magnetschicht 9a einschließlich der Isolation zwischen den Schichten 9a und 9b. Dieser geringere magnetische Widerstand kann bei der Schreibfunktion aufgrund der dann vorliegenden Sättigungsverhältnisse überwunden werden, während er jedoch bei der Lesefunktion, bei der keine Sättigung vorliegt, voll zur Wirkung kommt und den magnetischen Fluß über die Magnetschicht 9a sperrt, dafür aber über die Magnetschicht 9b führt.

Entsprechendes wird erreicht durch geeignete Wahl der reversiblen Permeabilitäten $\mu_{ra}$ und $\mu_{rb}$ der Magnetschichten 9a bzw. 9b. Höhere Permeabilität führt nämlich zu einem geringeren Widerstand. D.h., es gilt, $\mu_{ra} < \mu_{rb}$. Dies hat zur Folge, daß z.B. bei gleichen Sättigungsmagnetisierungen Msa, Msb die Magnetschicht 9b beim Schreiben schneller in die Sättigung getrieben wird als die Magnetschicht 9a, so daß dann entsprechende Verhältnisse vorliegen.

Auch durch die Wahl der in Bewegungsrichtung v zu messenden Schichtdicken d1 und d2 der Magnetschichten 9a bzw. 9b (vgl. Figur 4) kann das gewünschte Verhältnis der magnetischen Widerstände erzielt werden. Eine dickere Schicht entspricht nämlich einem kleineren magnetischen Widerstand. D.h., es gilt: Rmb < Rma, wobei Rma und Rmb die magnetischen Widerstände der Schichten 9a und 9b zumindest bzgl. des Schenkelendbereiches 11 sind.

Unter Einhaltung dieser Regel können in einer speziellen Ausgestaltung (Design) der Magnetköpfe aus der Vielfalt der Ausführungsmöglichkeiten die Wertekombinationen für die Sättigungsmagnetisierungen, Permeabilitäten, Schichtdicken, Stärke, Art und Eigenschaft der Isolationsschicht ausgesucht werden, die für einen Magnetkopf am günstigsten sind, welcher entweder nach dem Prinzip einer longitudinalen oder einer vertikalen Magnetisierung arbeiten soll. Für beide Aufzeichnungsverfahren sind die erfindungsgemäßen Maßnahmen anwendbar. Es ist nämlich unerheblich, ob ein Longitudinalkopf mit nahezu gleich starken magnetischen Polen P1 und P2 vorliegt oder ein spezifischer Vertikalkopf mit magnetischer Betonung des einen oder anderen Magnetschenkels, der somit als Einzelpol-Kopf wirkt.

Die Schreib-Lese-Schaltfunktion der Magnetschichten 9b/9a stellt eine Zusatzmaßnahme dar, die bei der Auslegung des Magnetkopfes zu berücksichtigen ist. In jedem Fall ist jedoch eine in Figur 2 gezeigte Verstärkungsschicht 9c des Magnetschenkels 9, die außerhalb des Endbereiches 11 auf der Magnetschicht 9b aufgebracht ist, vorzugsweise aus dem Material mit dem niedrigeren magnetischen Widerstand herzustellen.

Wie ferner aus Figur 2 hervorgeht, ist auch der zweite Magnetschenkel 10 noch mit einer Verstärkungsschicht 10c außerhalb seines Endbereiches 12 versehen. Für diese Verstärkungsschicht wird zweckmäßig das Material der Schichten 10a, 10b gewählt. Außerdem ist in dieser Figur noch eine isolierende äußere Schutzschicht 22 des Magnetkopfes, die z.B. aus $Al_2O_3$ bestehen 2 kann, angedeutet.

In den Figuren 5 und 6 sind zwei Varianten von Datenspuren jeweils als Ausschnitt aus der Draufsicht auf ein plattenförmiges Aufzeichnungsmedium schematisch veranschaulicht, die einem erfindungsgemäßen Magnetkopf, z.B. gemäß den Figuren 2 bis 4, entsprechen.

In Figur 5 sind dabei drei Datenspuren 24 bis 26 angedeutet. Diese Datenspuren weisen jeweils eine Schreibspur 24a bis 26a der Breite b1 = B1 auf. Von diesen Schreibspuren wird nur eine vergleichsweise schmälere Lesespur 24b bis 26b mit der Breite b2 = B2 ausgelesen. Zwischen benachbarten Datenspuren bzw. Schreibspuren ist dabei jeweils ein Abstandsbereich 28 mit einer Querausdehnung q von einigen $\mu m$ ausgebildet.

Gemäß Figur 6 kann gegebenenfalls auf die in Figur 5 gezeigten Abstandsbereiche 28 verzichtet werden. D.h., die Schreibspuren 31a bis 33a von Datenspuren 31 bis 33 können in diesem Falle unmittelbar aneinanderliegen. Aufgrund der erfindungsgemäß effektiv schmäleren Breite der Lesespuren 31b bis 33b verbleibt jedoch vorteilhaft zwischen diesen Lesespuren eine für eine ungestörte Datenerkennung hinreichend breite Abstandszone 35, die quasi einen "Lese-Rasen" darstellt.

Eine weitere Ausführungsform eines erfindungsgemäßen Magnetkopfes geht aus den Figuren 7 bis 9 hervor, wobei den Figuren 2 bis 4 entsprechende Darstellungen gewählt sind. Der dort gezeigte, mit 40 bezeichnete Magnetkopf unterscheidet sich von dem Magnetkopf 2 gemäß Figur 2 im wesentlichen nur dadurch, daß er einen ersten, dem Substrat 3 zugewandten Magnetschenkel 41 mit wiederum zwei Magnetschichten 41a und 41b unterschiedlicher Breite b1, b2 aufweist, wobei jedoch die breitere, die Breite der Schreibspur bestimmende Magnetschicht 41a nur in einem dem Aufzeichnungsmedium zugewandten vorderen Teil des Magnetschenkels 41 realisiert ist. Der Vorteil dieser Ausführungsform ist insbesondere in einem insgesamt niedrigeren magnetischen Widerstand des gesamten Magnetkreises zu sehen.

Ein entsprechender Magnetkopf 40 läßt sich beispielsweise mit folgenden Schritten herstellen:
- Herstellung der Magnetschicht 41a, z.B. durch Aufsputtern der Schicht und anschließende Mikrostrukturierung durch Naß- oder Trockenätztechniken.
- Aufbringen einer Isolationsschicht 20 z.B. aus SiO₂.
- Aufbringen einer weiteren Magnetschicht 41a' aus dem Material der zweiten (schmäleren) Magnetschicht 41b und Mikrostrukturierung, so daß eine ebene Struktur mit den Magnetschichten 41a und 41a' erhalten wird. Da beim Sputtern der Magnetschicht 41a' auch die Magnetschicht 41a mit bedeckt wird, muß bei dieser anschließenden Mikrostrukturierung der über der Magnetschicht 41a liegende Teil der Magnetschicht 41a' wieder abgeätzt werden.
- Aufbringen der zweiten Magnetschicht 41b.

Gegebenenfalls ist es auch möglich, auf die zusätzliche Magnetschicht 41a' zu verzichten. Zum Ausgleich kann dann die den Magnetschenkel 41 verstärkende Magnetschicht 41c etwas dicker ausgeführt werden.

Bei den in den Figuren dargestellten Ausführungsbeispielen der Magnetköpfe 2 und 40 wurde insbesondere eine senkrechte (vertikale) Magnetisierungsart eines entsprechenden Aufzeichnungsmediums M angenommen. Für diese Magnetisierungsart ist es besonders vorteilhaft, wenn der Magnetkopf praktisch nur mit dem ersten Magnetschenkel 9 bzw. 41 quasi als Einzelpol-Kopf schreibt. D.h., der Magnetkopf und insbesondere sein zweiter Magnetschenkel müssen hinsichtlich der Gestaltung und Materialwahl so ausgelegt sein, daß der zweite Magnetschenkel 10 an der Schreibfunktion praktisch nicht teilnimmt. Entsprechende Ausgestaltungen von Magnetköpfen sind allgemein bekannt (vgl. z.B. die eingangs genannte EP-A, ferner die EP-A-0 150 371 oder die EP-A-0 146 861). Gegebenenfalls ist es jedoch auch möglich, den Magnetkopf und insbesondere seinen zweiten Magnetschenkel so auszulegen, daß dieser zweite Magnetschenkel magnetisch zu dem ersten Magnetschenkel parallelgeschaltet ist und somit beide Magnetschenkel gemeinsam an den Polen P1 und P2 ein etwa gleich starkes, gleichgerichtetes Schreibfeld erzeugen (vgl. z.B. die EP-A-0 150 372 oder die EP-A-0 166 031).

Wie bereits erwähnt, sind die erfindungsgemäßen Maßnahmen auch für Magnetköpfe geeignet, die gemäß dem longitudinalen (horizontalen) Magnetisierungsprinzip arbeiten. In diesem Falle werden an den beiden Magnetpolen P1 und P2 Magnetfelder mit entgegengesetzter Magnetisierungsrichtung hervorgerufen.

## Ansprüche

1. Dünnfilm-Magnetkopf mit schichtweisem Aufbau, welcher Magnetkopf
a) über einer Datenspur eines magnetisierbaren Aufzeichnungsmediums zu führen ist
und
b) einen den magnetischen Fluß führenden, ringkopfähnlichen magnetischen Leitkörper mit einem ersten und einem zweiten Magnetschenkel enthält, wobei diese Magnetschenkel
- jeweils mindestens eine magnetische Schicht mit vorbestimmtem magnetischen Verhalten aufweisen,
- dem Aufzeichnungsmedium zugewandte Magnetpole ausbilden, die in (relativer) Bewegungsrichtung des Magnetkopfes bezüglich des Aufzeichnungsmediums gesehen hintereinander angeordnet und durch einen Spalt vorbestimmter Weite getrennt sind und vorbestimmte Breiten quer zur Bewegungsrichtung haben,
sowie
- außerhalb des Polbereichs einen Zwischenraum begrenzen, durch welchen sich die Windungen einer Schreib- und/oder Lesespulenwicklung erstrekken,
dadurch gekennzeichnet, daß der Magnetpol (P1) des ersten Magnetschenkels (9, 41) insgesamt eine größere Breite (B1) als der Magnetpol (P2) des zweiten Magnetschenkels (10) hat, wobei der Magnetpol (P1) des ersten Magnetschenkels (9, 41) von mindestens zwei gegenseitig isolierten Magnetschichten (9a, 9b; 41a) mit unterschiedlicher Breite (b1, b2) und unterschiedlichem magnetischen Verhalten (Msa, $\mu$ra; Msb, $\mu$rb) gebildet ist, so daß die Magnetschicht (9a, 41a) mit der größeren Breite (b1) zumindest in einem an den Magnetpol (P1) angrenzenden Endbereich (11) des ersten Magnetschenkels (9, 41) effektiv einen größeren magnetischen Widerstand (Rma) hat als die Magnetschicht (9b) mit der geringeren Breite (b2).

2. Magnetkopf nach Anspruch 1, **dadurch gekennzeichnet,** daß die Breite (B2) des zweiten Magnetschenkels (10) zumindest annähernd gleich der Breite (b2) der schmäleren Magnetschicht (9b) des ersten Magnetschenkels (9, 41) ist.

3. Magnetkopf nach Anspruch 1 oder 2, **dadurch gekennzeichnet,** daß die Magnetschicht (9a, 41a) mit der größeren Breite (b1) des ersten Magnetschenkels (9, 41) zumindest in dem Endbereich (11) dieses Schenkels aus einem Material besteht, dessen Sättigungsmagnetisierung (Msa) größer ist als die Sättigungsmagnetisierung (Msb) der schmäleren Magnetschicht (9b) dieses Schenkels.

4. Magnetkopf nach einem der Ansprüche 1 bis 3, **dadurch gekennzeichnet,** daß die Magnetschicht (9a, 41a) mit der größeren Breite (b1) des ersten Magnetschenkels (9, 41) zumindest in dem Endbereich (11) dieses Schenkels aus einem Material besteht, dessen reversible Permeabilität ($\mu$ra) kleiner ist als die Permeabilität ($\mu$rb) der schmäleren Magnetschicht (9b) dieses Schenkels.

5. Magnetkopf nach einem der Ansprüche 1 bis 4, **dadurch gekennzeichnet,** daß die Magnetschicht (9a, 41a) mit der größeren Breite (b1) des ersten Magnetschenkels (9, 41) zumindest in dem Endbereich (11) dieses Schenkels eine größere Dicke ($d_1$) hat als der schmälere Magnetschenkel (9b) dieses Schenkels.

6. Magnetkopf nach einem der Ansprüche 1 bis 5, **dadurch gekennzeichnet,** daß die beiden Magnetschichten (9a, 41a bzw. 10) des ersten Magnetschenkels (9, 41) durch eine Isolationsschicht (20) getrennt sind, über welche während der Schreibfunktion aufgrund einer hinreichend starken Erregung der Spulenwicklung (18) die beiden Magnetschichten magnetisch miteinander gekoppelt sind.

7. Magnetkopf nach Anspruch 6, **dadurch gekennzeichnet,** daß die Isolationsschicht (20) aus $SiO_2$ besteht.

8. Magnetkopf nach einem der Ansprüche 1 bis 7, **gekennzeichnet durch** eine Anordnung auf einer rückwärtigen Flachseite eines als aerodynamischer Flugkörper gestalteten Substrates (3).

9. Magnetkopf nach einem der Ansprüche 1 bis 8, **dadurch gekennzeichnet,** daß er (2, 40) über ein senkrecht (vertikal) zu magnetisierendes Aufzeichnungsmedium (M) zu führen ist und so ausgestaltet ist, daß er quasi als Einzelpol-Kopf praktisch nur mit dem ersten Magnetschenkel (9, 41) die Schreibfunktion ausübt.

10. Magnetkopf nach einem der Ansprüche 1 bis 8, **dadurch gekennzeichnet,** daß er (2, 40) über ein senkrecht (vertikal) zu magnetisierendes Aufzeichnungsmedium (M) zu führen ist und so ausgestaltet ist, daß mit seinen beiden Magnetschenkeln (9, 41 bzw. 10) ein Schreibfeld zu erzeugen ist, das an den beiden Magnetpolen (P1, P2) parallelgerichtet ist.

11. Magnetkopf nach einem der Ansprüche 1 bis 8, **dadurch gekennzeichnet,** daß er über ein longitudinal (horizontal) zu magnetisierendes Aufzeichnungsmedium zu führen ist und so ausgestaltet ist, daß mit seinen beiden Magnetschenkeln ein Schreibfeld zu erzeugen ist, welches an den beiden Magnetpolen antiparallel gerichtet ist.

| Konzept | A | B | C | D | E |
|---|---|---|---|---|---|
| Schreibfunktion | | | | | |
| Lesefunktion | | | | | |

B2, P2, S, P1, B1, v

FIG 1

EP 0 311 855 A2

87 P 3396

87 P 3396

FIG 2

FIG 3

FIG 4

FIG 5

87 P 3396

FIG 7

FIG 6

FIG 8

FIG 9